# EUROPÄISCHE PATENTSCHRIFT

(11) **EP 2 952 397 B1**
(45) Veröffentlichungstag und Bekanntmachung des Hinweises auf die Patenterteilung: **01.01.2020**
(21) Anmeldenummer: 15164160.2
(22) Anmeldetag: 20.04.2015
(51) Int. Cl.: B60S 1/46, B60S 1/54, B62D 33/06

(54) **FAHRERKABINE FÜR EIN LANDWIRTSCHAFTLICHES FAHRZEUG MIT TRANSPARENTER DACHFLÄCHE UND VERUNREINIGER DAFÜR**
DRIVER'S CAB FOR AN AGRICULTURAL VEHICLE WITH TRANSPARENT ROOF PANEL AND CLEANING DEVICE THEREFOR
CABINE POUR UN VÉHICULE AGRICOLE AVEC TOIT TRANSPARENT ET DISPOSITIF DE NETTOYAGE POUR CE DERNIER

(30) Priorität: 03.06.2014 DE 102014107782
(43) Veröffentlichungstag der Anmeldung: 09.12.2015
(73) Patentinhaber: CLAAS Tractor S.A.S., 78141 Vélizy-Villacoublay Cedex (FR)
(72) Erfinder: Chambe, Julien, 78990 Elancourt (FR)
(74) Vertreter: CLAAS Gruppe

(56) Entgegenhaltungen:
- DE-A1- 1 655 137
- DE-U1-202007 010 451
- JP-U- H0 558 759
- US-A1- 2014 110 972

## Beschreibung

Die vorliegende Erfindung betrifft eine Fahrerkabine für ein landwirtschaftliches Fahrzeug gemäß dem Oberbegriff des Anspruchs 1.

Fahrerkabinen landwirtschaftlicher Fahrzeuge werden bedarfsweise mit einem Sonnendach ausgestattet. In diesem Fall umfasst ein Dach der Fahrerkabine, das einen Kabineninnenraum der Fahrerkabine nach oben begrenzt, unter anderem eine transparente Dachfläche. Diese (lichtdurchlässige) Dachfläche erstreckt sich in der Regel über einen Teil der Fläche des Dachs mit dem Zweck einer Sichtverbesserung für den Fahrer und/oder ganz allgemein, um einen zusätzlichen Lichteinfall in die Fahrerkabine zu schaffen.

Insbesondere bei Traktoren, die mit einem Frontlader ausgestattet sind, spielt der Aspekt der Sichtverbesserung sogar funktional eine Rolle, denn abhängig von der Höhenstellung des Frontladers kann es bei Fahrerkabinen ohne Sonnendach passieren, dass der Fahrer vom Fahrersitz im Kabineninnraum aus das vorderendseitig angebrachte Arbeitswerkzeug des Frontladers aus seinem Blickfeld verliert, wenn nämlich der Frontlader in großer Arbeitshöhenstellung betrieben wird. Ein Sonnendach, das zu diesem Zweck in der Regel in einem vorderen Bereich des Kabinendachs angeordnet ist, trägt hier zu einer deutlichen Sichterweiterung nach oben bei, die eine Beobachtung des vorderen Bereichs des Frontladers auch bei hoher Arbeitsstellung ermöglicht. In diesem Zusammenhang sei beispielhaft auf WO 2011/089122 verwiesen, worin eine Fahrerkabine eines Traktors gemäß dem Oberbegriff des Anspruchs 1 offenbart ist.

Ein wie beispielsweise in WO 2011/089122 gezeigtes Sonnendach oder auch anders ausgebildete transparente Dachflächen bringen zwar den Nutzen einer verbesserten Sicht bzw. eines allgemein vergrößerten Lichteinfalls in den Kabineninnenraum. Im praktischen Einsatz landwirtschaftlicher Fahrzeuge weisen diese Dächer jedoch den Nachteil auf, dass aufgrund der oftmals staubigen Umgebungsbedingungen (beispielsweise während eines Ernteeinsatzes) die transparente Dachfläche schnell verschmutzt, indem sich in der Umgebungsluft befindliche Verunreinigungen (Staubpartikel, Stroh, Halm- bzw. allgemein Pflanzenreste und dergleichen) darauf ablagern. Die Schmutzablagerungen führen dann zu einer Sichtbeeinträchtigung. Im extremen Fall, kann die Sicht durch die transparente Dachfläche aufgrund starker Verunreinigung vollständig verdeckt sein. Da die Dachfläche üblicherweise etwa horizontal verläuft oder zumindest eine nur sehr geringe Neigung aufweist, fallen die Verunreinigungen nicht bereits schwerkraftbedingt zu Boden bzw. rutschen nicht selbständig hinunter. Da landwirtschaftliche Fahrzeuge insbesondere bei Feldfahrt oder bei Rangierarbeiten nur geringe Fahrgeschwindigkeiten erreichen, entsteht auch kein ausreichender Fahrtwind, der die Verunreinigungen wegblasen könnte.

Aus der gattungsgemäßen JP H05 58759 U ist eine Fahrerkabine für ein Baufahrzeug bekannt, deren Kabineninnenraum nach oben durch ein Dach begrenzt ist, das eine transparente Dachfläche umfasst. Die Dachfläche ist in einer Rahmenstruktur der Fahrerkabine eingefasst. Auf der Dachfläche ist eine Sprühvorrichtung angeordnet, durch welche ein Fluid auf die transparente Dachfläche aufbringbar ist. Zudem ist ein Scheibenwischer zur Unterstützung der Reinigung der Dachfläche auf dieser angeordnet. Die oberhalb einer Windschutzscheibe angeordnete transparente Dachfläche ist durch ein Bauteil der Rahmenstruktur von diesem getrennt. Nachteilig ist, dass durch das Fluid und den Scheibenwischer in Richtung der Windschutzscheibe verdrängte Verunreinigungen sich an dem Rahmenbauteil aufstauen und auf die Dachfläche zurückstauen.

Es ist daher eine Aufgabe der vorliegenden Erfindung, eine Fahrerkabine der eingangs beschriebenen Art anzugeben, deren transparente Dachfläche sich von Verunreinigungen, insbesondere von einsatzbedingten Schmutzablagerungen, freihalten lässt.

Die Aufgabe wird gelöst durch eine Fahrerkabine gemäß den Merkmalen des Anspruchs 1. Diese zeichnet dadurch aus, dass der transparenten Dachfläche Mittel zur gerichteten Aufbringung eines Fluids zugeordnet sind, um Verunreinigungen von der transparenten Dachfläche zu entfernen, wobei die transparente Dachfläche mit einer vorderen Kante unmittelbar an eine Windschutzscheibe angrenzt und dass die transparente Dachfläche entlang der vorderen Kante mit der Windschutzscheibe verklebt ist. Dabei wurde zunächst gesehen, dass die Ansammlung von Verschmutzung auf der transparenten Dachfläche hinsichtlich der Funktion und Betriebssicherheit einen Nachteil darstellt, zumal aufgrund geringer Flächenneigung und geringem Fahrtwind unter den üblichen Arbeitsbedingungen kein Selbstreinigungseffekt eintritt. Weiterhin wurde erkannt, dass eine herkömmliche Art der Reinigung einer transparenten Fläche - mittels eines Scheibenwischers wie üblicherweise an der frontseitigen Windschutzscheibe - für den Einsatzzweck am Dach den Nachteil aufweist, dass eine Scheibenwischeranordnung an der transparenten Dachfläche eine erhebliche Sichtbeeinträchtigung darstellen würde. Zudem wäre eine Scheibenwischeranordnung an Einbauort des Kabinendachs mechanischer Beanspruchung ausgesetzt, beispielsweise wenn das Fahrzeug unter niedrigen Bäumen oder dergleichen hindurchfährt. Erfindungsgemäß entstand die Idee, die transparente Dachfläche allein durch gerichtetes Aufbringen eines Fluids von Verunreinigungen zu befreien. Das Fluid - ein Gas oder eine Flüssigkeit - lässt sich dabei vorzugsweise mit hoher Geschwindigkeit bzw. mit hohem Druck so auf die transparente Dachfläche aufbringen, dass darauf befindliche Verunreinigungen aus ihrer Position gelöst und von der transparenten Dachfläche entfernt werden. Eine derartige Lösung bietet den Vorzug, dass - neben Mitteln zum Aufbringen des Fluids - keinerlei mechanisch bewegliche Bauteile im Außenbereich des Dachs vorzusehen sind. Die Technik ist somit wenig störanfällig, und es besteht praktisch keine Sichtbeeinträchtigung. Die eingangs genannte Aufgabe wird somit gelöst.

Grundsätzlich kann es sich bei dem Fluid um eine gasförmige oder flüssige Substanz handeln. Gemäß einer besonders bevorzugten Ausführungsform handelt sich bei dem Fluid um ein Gas, insbesondere um komprimierte Luft. Der Einsatz komprimierter Luft bietet für den Einsatzzweck verschiedene Vorteile. Da durch alleinigen Einsatz von Luft eine Trockenreinigung der transparenten Dachfläche stattfindet, werden auf der Dachfläche befindliche Verunreinigungen nicht befeuchtet. Es besteht somit keine Gefahr des Verklebens. Stattdessen lassen sich die Verunreinigungen leicht vom Luftstrom wegblasen, ohne dass der Reinigungsvorgang selbst Spuren hinterlässt und/oder die Sicht beeinträchtigt. Die Notwendigkeit einer Ablaufmöglichkeit für das verbrauchte Reinigungsmedium - wie für eine Flüssigkeit - entfällt. Daneben bietet Luft als Reinigungsmedium den Vorteil, dass diese ohne Mitführen eines Vorrats jederzeit aus der Umgebungsluft frei entnehmbar ist.

Gemäß einer alternativen Ausführung der Erfindung handelt es sich bei dem Fluid um eine Flüssigkeit, insbesondere um Wasser. Gegenüber einem gasförmigen Reinigungsmedium bietet beispielsweise Wasser den Vorzug, dass sich unter der Einwirkung von Wasser selbst stark anhaftende Verunreinigungen noch von der transparenten Dachfläche lösen lassen. Dazu kann das Wasser mit hohem Druck bzw. hoher Geschwindigkeit aufgebracht werden, so dass es mit hoher kinetischer Energie auf verunreinigte Bereiche auftrifft, um diese mit hohem Effekt abzulösen. Weiterhin kann durch das Aufbringen von Wasser ein Aufweichen einer möglicherweise angetrockneten Verunreinigung erreicht werden, so dass sich diese - zumindest nach einer gewissen Einwirkzeit - leichter lösen lässt. Im Fall der Nutzung von Wasser kann vorteilhaft ein bereits an dem Fahrzeug vorhandener Wassertank - beispielsweise der Scheibenwaschanlage - mitgenutzt werden.

Zum gerichteten Aufbringen des Fluids auf die transparente Dachfläche sind zweckmäßigerweise am Dach ein oder mehrere Auslasselemente angeordnet, die sich über eine Druckleitung mit dem Fluid versorgen lassen. Die Auslasselemente geben vor, an welcher Stelle jeweils Fluid abgegeben wird und geben weiterhin die Richtung vor, in welcher das Fluid abgegeben wird. Vorteilhaft handelt es sich bei einem Auslasselement um eine Düse, also ein rohrförmiges Element, mit dem sich in der Druckleitung befindliches, unter Druck stehendes Fluid beschleunigen und/oder in eine (oder mehrere) gewünschte Richtung lenken lässt.

Gemäß einer vorteilhaften Weiterbildung umfasst das Dach eine tragende Dachstruktur, an welcher die transparente Dachfläche befestigt ist. Bei einer solchen Gestaltung können die Auslasselemente vorteilhaft in einen an die transparente Dachfläche angrenzenden Randabschnitt der Dachstruktur integriert sein. Durch eine solche Integration der Auslasselemente in die Dachstruktur kann vorteilhaft die Druckleitung zumindest bereichsweise innerhalb der Dachstruktur geführt werden, so dass diese vor mechanischer Beanspruchung geschützt und von außen nicht sichtbar verläuft.

Die Erfindung lässt sich für verschiedenartige Kabinendächer einsetzen. Erfindungsgemäß grenzt dabei die transparente Dachfläche an eine Windschutzscheibe an. Die transparente Dachfläche erstreckt sich somit bis zu einem vorderen Bereich, bis an die - bezogen auf die Fahrtrichtung - vordere Kante des Kabinendachs. Ein direkter Kontakt mit der Windschutzscheibe entlang einer gemeinsamen Klebekante ist vorgesehen. Eine solche Gestaltung bietet einen besonderen Komfort, indem nämlich durch Windschutzscheibe und daran angrenzende transparente Dachfläche ein praktisch unterbrechungsfreier Sichtbereich geschaffen wird. Im Zusammenhang mit der Erfindung ergibt sich der Vorteil, dass Verunreinigungen besonders leicht nach vorn von der annähernd horizontal verlaufenden transparenten Dachfläche entfernt werden können, da die transparente Dachfläche nach vorn hin nicht durch die Dachstruktur begrenzt wird.

Damit im Bedarfsfall eine ausreichende Menge des aufzubringenden Fluids bereitsteht, ist vorzugsweise ein Drucktank zur Speicherung des unter Druck stehenden Fluids vorgesehen, wobei der Drucktank über ein Steuerventil an die Druckleitung angeschlossen ist, so dass im Drucktank gespeichertes Fluid bei geöffnetem Steuerventil durch die Auslasselemente austritt. Der Drucktank kann dabei der Fahrerkabine zugeordnet sein und beispielsweise dachseitig oder bodenseitig in diese integriert sein.

Alternativ kann der Drucktank dem die Fahrerkabine aufnehmenden Fahrzeug zugeordnet sein. Insbesondere könnte ein bereits am Fahrzeug zu anderen Zwecken vorhandener Drucktank mitgenutzt werden.

In jedem der Fälle ist zweckmäßigerweise dem Drucktank ein Kompressor zugeordnet, mit dem sich im Drucktank ein vorgebbarer Luftdruck erzeugen lässt. Dieser Kompressor kann wahlweise an der Fahrerkabine oder außerhalb der Fahrerkabine am Fahrzeug angeordnet sein, beispielsweise indem ein auch zu anderen Zwecken ohnehin vorhandener Kompressor mitgenutzt wird.

Damit jederzeit ein ausreichender Fluiddruck im Drucktank bereitsteht, ist zweckmäßigerweise dem Drucktank ein Drucksensor zugeordnet, der Teil eines Regelsystems zur Aufrechterhaltung eines vorgebbaren Luftdrucks im Drucktank ist, das bei Unterschreiten des vorgebbaren Luftdrucks den Kompressor selbsttätig aktiviert. Ein Bediener braucht sich in diesem Fall nicht darum zu kümmern, den Luftdruck im Drucktank zu kontrollieren und gegebenenfalls anzupassen.

Zur Auslösung eines Reinigungsvorgangs ist vorzugsweise im Kabineninnenraum eine Bedieneinrichtung angeordnet, mit der sich das Steuerventil öffnen lässt, um beispielsweise auf Knopfdruck eine Reinigung der transparenten Dachfläche durchzuführen.

Die beschriebene Erfindung eignet sich allgemein für Fahrerkabinen landwirtschaftlicher Fahrzeuge. In besonderer Weise findet die beschriebene Erfindung Anwendung an der Fahrerkabine eines Traktors, der mit einem Frontlader ausgestattet ist, da für derartige Traktoren eine besondere Notwendigkeit besteht, eine freie Sicht durch die transparente Dachfläche zu gewährleisten.

Die Erfindung wird nachfolgend anhand der beigefügten Zeichnung näher erläutert. Daraus ergeben sich auch weitere vorteilhafte Effekte und Wirkungen der Erfindung. In der Zeichnung zeigt:
- Fig. 1: einen Traktor in schematischer Seitenansicht mit einer erfindungsgemäßen Fahrerkabine,
- Fig. 2: eine perspektivische Darstellung einer erfindungsgemäßen Fahrerkabine von schräg vorn,
- Fig. 3: eine Draufsicht auf eine erfindungsgemäße Fahrerkabine.

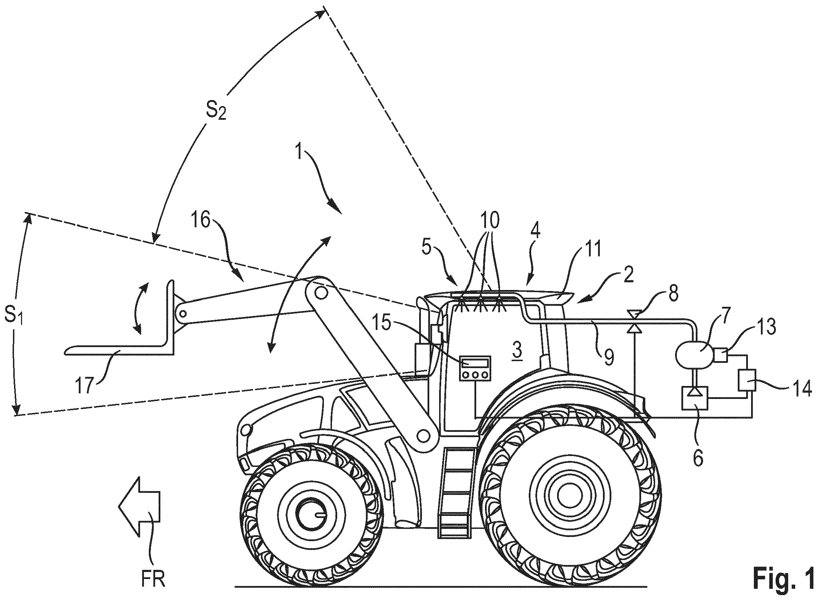

In Fig. 1 ist in einer schematischen Seitenansicht eine erfindungsgemäße Fahrerkabine 2 dargestellt, die Teil eines landwirtschaftlichen Fahrzeugs in Form eines Traktors 1 ist. Der Traktor 1 weist eine durch einen Pfeil FR angedeutete Vorwärtsfahrtrichtung auf. Frontseitig ist der Traktor 1 mit einem für sich gesehen üblichen Frontlader 16 ausgestattet, der sich zur Durchführung bestimmungsgemäßer Hubarbeiten in der Höhe verstellen lässt. Ein frontseitig angeordnetes Arbeitswerkzeug 17, beispielsweise eine Hubgabel, kann durch Verstellung des Frontladers 16 in unterschiedliche Höhenpositionen bewegt werden.

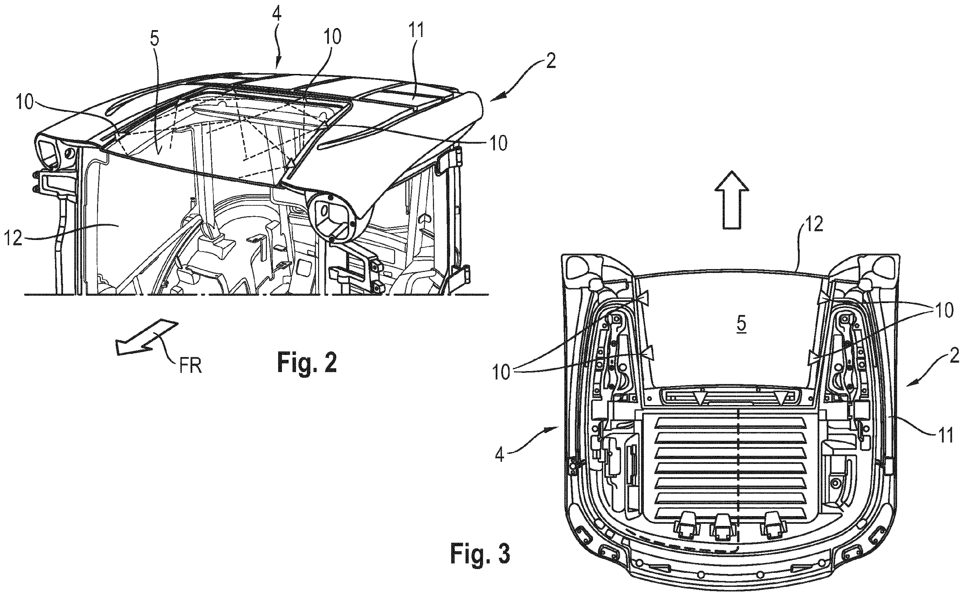

In der in Fig. 1 gezeigten Höhenposition kann ein in der Fahrerkabine 2 befindlicher Fahrer das Arbeitswerkzeug 17 durch eine Windschutzscheibe 12 (in dieser Ansicht nicht sichtbar, aber vgl. Fig. 2) der Fahrerkabine 2 sehen, wie durch die gestrichelten Linien ersichtlich, die einen ersten Sichtbereich S₁ des Fahrers durch die Windschutzscheibe 12 andeuten. Wird das Arbeitswerkzeug 17 durch Verstellung des Frontladers 16 jedoch in eine deutlich höhere Position gehoben, so ist das Arbeitswerkzeug 17 nur noch durch eine im Dach 4 der Fahrerkabine 2 vorgesehene transparente Glasfläche 5 zu sehen (zweiter Sichtbereich S₂). Dazu sei nachfolgend auf Fig. 2 verwiesen.

Wie in Fig. 2 zu sehen, die eine perspektivische Darstellung der Fahrerkabine 2 des in Fig. 1 gezeigten Traktors 1 von schräg vorn ist, weist ein Dach 4 der Fahrerkabine 2 eine tragende Dachstruktur 11 sowie die transparente Glasfläche 5 auf. Die transparente Glasfläche 5 hat eine viereckige, annähernd rechteckige Form und ist an drei Kanten (hinten und jeweils seitlich) an der Dachstruktur 11 befestigt. An einer vorderen Kante (bezogen auf die Fahrtrichtung FR) grenzt die Glasfläche 5 an die Windschutzscheibe 12 der Fahrerkabine 12 an und ist mit dieser entlang der Vorderkante verklebt. Dadurch dass die Windschutzscheibe 12 unmittelbar an die dachseitige Glasfläche 5 angrenzt, gehen der erste Sichtbereich S₁ und der zweite Sichtbereich S₂ (vgl. wieder Fig. 1) quasi unterbrechungsfrei ineinander über. Ein in der Fahrerkabine 2 sitzender Fahrer kann somit das frontendseitige Ende des Frontladers 16, an dem das Arbeitswerkzeug 17 befestigt ist, in praktisch sämtlichen möglichen Höhenstellungen durchgehend beobachten.

Die Glasfläche 5 in Kombination mit der angrenzenden Windschutzscheibe 12 bietet demnach den Nutzen einer verbesserten Sicht bzw. eines allgemein vergrößerten Lichteinfalls in einen Innenraum 3 der Fahrerkabine 2. Im praktischen Einsatz besteht bei einer solchen Anordnung jedoch der Nachteil, dass aufgrund der oftmals staubigen Umgebungsbedingungen (beispielsweise während eines Ernteeinsatzes) die transparente Dachfläche 5 schnell verschmutzt, indem sich in der Umgebungsluft befindliche Verunreinigungen (Staubpartikel, Stroh, Halm- bzw. allgemein Pflanzenreste und dergleichen) darauf ablagern. Die Schmutzablagerungen führen dann wiederum doch zu einer Sichtbeeinträchtigung. Im extremen Fall, kann die Sicht durch die Glasfläche 5 aufgrund starker Verunreinigung vollständig gehindert sein. Da die Dachfläche 5 annähernd horizontal verläuft oder zumindest eine nur sehr geringe Neigung aufweist, fallen die Verunreinigungen nicht bereits schwerkraftbedingt zu Boden bzw. rutschen nicht selbständig hinunter. Da Traktoren 1 insbesondere bei Feldfahrt oder bei Rangierarbeiten mit einem Frontlader nur geringe Fahrgeschwindigkeiten erreichen, entsteht auch kein ausreichender Fahrtwind, der die Verunreinigungen einfach wegblasen könnte.

Bei der erfindungsgemäßen Fahrerkabine 2 sind zur Lösung dieses Problems daher der Glasfläche 5 Mittel 6, 7, 8, 9, 10 zur gerichteten Aufbringung eines Fluids zugeordnet, um Verunreinigungen von der transparenten Dachfläche 5 zu entfernen. Dazu sind, wie in Fig. 2 dargestellt, in die Dachstruktur 11 an jeweils an die Glasfläche 5 angrenzenden Randabschnitten insgesamt sechs Auslasselemente in Form von Düsen 10 integriert. Die Düsen 10 sind jeweils so ausgebildet und ausgerichtet, dass ein aus diesen austretender Luftstrom auf die Glasfläche 5 gerichtet ist, um darauf befindliche Verunreinigungen zu lösen und so zu beschleunigen, dass diese die Glasfläche 5 verlassen.

Wie in Fig. 1 dargestellt, lassen sich die Düsen 10 über eine gemeinsame Druckleitung 9 mit Druckluft versorgen. Zu diesem Zweck weist der Traktor 1 einen Drucktank 7 zur Speicherung von Druckluft auf. Der Drucktank 7 ist über ein Steuerventil 8 an die Druckleitung 9 angeschlossen, so dass im Drucktank 7 gespeicherte Druckluft bei geöffnetem Steuerventil 8 durch Druckleitung 9 strömt und zu den Düsen 10 gelangt, um durch die Düsen 10 auszutreten.

Wie ebenfalls Fig. 1 zu entnehmen, ist dem Drucktank 7 ein Kompressor 6 zugeordnet, mit dem sich im Drucktank 7 ein vorgebbarer Luftdruck erzeugen lässt. Sowohl der Drucktank 7 als auch der Kompressor 6 können jeweils der Fahrerkabine 2 zugeordnet und in diese integriert sein, beispielsweise dach- oder bodenseitig. Alternativ ist eine Anbringung am Traktor 1, außerhalb der Fahrerkabine 2, denkbar. Beispielsweise könnten ein ohnehin am Traktor 1 vorhandener Drucktank 7 und/oder Kompressor 6 für die Reinigungsfunktion des Dachs 4 mitgenutzt werden.

Damit stets gewährleistet ist, dass ein für einen Reinigungsvorgang des Dachs 4 ausreichender Luftvorrat im Drucktank 7 gespeichert ist, ist dem Drucktank 7 ein Drucksensor 13 zugeordnet, der Teil eines Regelsystems zur Aufrechterhaltung eines vorgebbaren Luftdrucks im Drucktank 7 ist. Das Regelsystem aktiviert bei Unterschreiten des vorgebbaren Luftdrucks den Kompressor 6 selbsttätig. Das Regelsystem umfasst dazu einen Regler 14, der in Abhängigkeit eines vom Drucksensor 13 erfassten Luftdrucks im Drucktank 7 den Kompressor 6 ansteuert.

Im Kabineninnenraum 3 der Fahrerkabine 2 ist eine Bedieneinrichtung 15 angeordnet, mit der sich unter anderem das Steuerventil 8 öffnen lässt, um eine Reinigung der Glasfläche 5 durchzuführen. Da das Regelsystem selbständig den Druck im Drucktank 7 überwacht und aufrechterhält, beschränkt sich die Bedienung der so geschaffenen Reinigungseinrichtung für einen Fahrer des Traktors 1 darauf, dass er per Knopfdruck einen Reinigungsvorgang in Form einer Druckluftbeaufschlagung auslöst.

Alternativ oder ergänzend kann vorgesehen sein, dass es sich bei dem als Reinigungsmedium genutzten Fluid um Wasser handelt. Selbstverständlich kann vorgesehen sein, dass die Fluidversorgung durch andere als die anhand des konkreten Ausführungsbeispiels beschriebenen Mittel erfolgt.

### Bezugszeichenliste

- 1: Traktor
- 2: Fahrerkabine
- 3: Kabineninnenraum
- 4: Dach
- 5: Glasfläche
- 6: Kompressor
- 7: Drucktank
- 8: Ventil
- 9: Druckleitung
- 10: Düse
- 11: Dachstruktur
- 12: Windschutzscheibe
- 13: Drucksensor
- 14: Regler
- 15: Bedieneinrichtung
- 16: Frontlader
- 17: Arbeitswerkzeug

- FR: Fahrtrichtung
- S₁: erster Sichtbereich
- S₂: zweiter Sichtbereich

## Patentansprüche

1. Fahrerkabine (2) für ein landwirtschaftliches Fahrzeug, insbesondere für einen Traktor (1), deren Kabineninnenraum (3) nach oben durch ein Dach (4) begrenzt ist, das eine transparente Dachfläche (5) umfasst, wobei der transparenten Dachfläche (5) Mittel (6, 7, 8, 9, 10) zur gerichteten Aufbringung eines Fluids zugeordnet sind, um Verunreinigungen von der transparenten Dachfläche (5) zu entfernen,
**dadurch gekennzeichnet, dass** die transparente Dachfläche (5) mit einer vorderen Kante unmittelbar an eine Windschutzscheibe (12) angrenzt und dass die transparente Dachfläche (5) entlang der vorderen Kante mit der Windschutzscheibe (12) verklebt ist.

2. Fahrerkabine nach Anspruch 1, **dadurch gekennzeichnet, dass** es sich bei dem Fluid um ein Gas, insbesondere um komprimierte Luft handelt.

3. Fahrerkabine nach Anspruch 1, **dadurch gekennzeichnet, dass** es sich bei dem Fluid um eine Flüssigkeit, insbesondere um Wasser handelt.

4. Fahrerkabine nach einem der vorigen Ansprüche, **dadurch gekennzeichnet, dass** am Dach (4) ein oder mehrere Auslasselemente (10) angeordnet sind, die sich über eine Druckleitung (9) mit dem Fluid versorgen lassen.

5. Fahrerkabine nach Anspruch 4, **dadurch gekennzeichnet, dass** das Dach (4) eine tragende Dachstruktur (11) umfasst, an welcher die transparente Dachfläche (5) befestigt ist, wobei die Auslasselemente (10) in einen an die transparente Dachfläche (5) angrenzenden Randabschnitt der Dachstruktur (11) integriert sind.

6. Fahrerkabine nach einem der Ansprüche 4 oder 5, **gekennzeichnet durch** einen Drucktank (7) zur Speicherung des unter Druck stehenden Fluids, wobei der Drucktank (7) über ein Steuerventil (8) an die Druckleitung (9) angeschlossen ist, so dass im Drucktank (7) gespeichertes Fluid bei geöffnetem Steuerventil (8) durch die Auslasselemente (10) austritt.

7. Fahrerkabine nach Anspruch 6, **dadurch gekennzeichnet, dass** dem Drucktank (7) ein Kompressor (6) zugeordnet ist, mit dem sich im Drucktank (7) ein vorgebbarer Luftdruck erzeugen lässt.

8. Fahrerkabine nach Anspruch 7, **dadurch gekennzeichnet, dass** dem Drucktank (7) ein Drucksensor (13) zugeordnet ist, der Teil eines Regelsystems zur Aufrechterhaltung eines vorgebbaren Luftdrucks im Drucktank (7) ist, das bei Unterschreiten des vorgebbaren Luftdrucks den Kompressor (6) selbsttätig aktiviert.

9. Fahrerkabine nach einem der Ansprüche 6 bis 8, **dadurch gekennzeichnet, dass** vorzugsweise im Kabineninnenraum (3) eine Bedieneinrichtung (15) angeordnet ist, mit der sich das Steuerventil (8) öffnen lässt, um eine Reinigung der transparenten Dachfläche (5) durchzuführen.

10. Fahrerkabine nach einem der vorigen Ansprüche, **dadurch gekennzeichnet, dass** es sich bei dem Fahrzeug um einen mit einem Frontlader (16) ausgestatteten Traktor (1) handelt.

## Claims

1. A driver's cab (2) for an agricultural vehicle, in particular for a tractor (1), the cab interior (3) of which is delimited upwardly by a roof (4) which includes a transparent roof panel (5), wherein associated with the transparent roof panel (5) are means (6, 7, 8, 9, 10) for directedly applying a fluid to remove contamination from the transparent roof panel (5),
**characterised in that** the transparent roof panel (5) with a front edge immediately adjoins a windscreen (12) and the transparent roof panel (5) is glued along the front edge to the windscreen (12).

2. A driver's cab according to claim 1 **characterised in that** the fluid is a gas, in particular compressed air.

3. A driver's cab according to claim 1 **characterised in that** the fluid is a liquid, in particular water.

4. A driver's cab according to one of the preceding claims **characterised in that** arranged on the roof (4) are one or more outlet elements (10) which can be supplied with the fluid by way of a pressure line (9).

5. A driver's cab according to claim 4 **characterised in that** the roof (4) includes a supporting roof structure (11) to which the transparent roof panel (5) is fixed, wherein the outlet elements (10) are integrated in an edge portion of the roof structure (11), that adjoins the transparent roof panel (5).

6. A driver's cab according to one of claims 4 and 5 **characterised by** a pressure tank (7) for storing the fluid which is under pressure, wherein the pressure tank (7) is connected to the pressure line (9) by way of a control valve (8) so that when the control valve (8) is opened fluid stored in the pressure tank (7) issues through the outlet elements (10).

7. A driver's cab according to claim 6 **characterised in that** associated with the pressure tank (7) is a compressor (6) with which a predeterminable air pressure can be generated in the pressure tank (7).

8. A driver's cab according to claim 7 **characterised in that** associated with the pressure tank (7) is a pressure sensor (13) which is part of a control system for maintaining a predeterminable air pressure in the pressure tank (7), which when the air pressure falls below the predeterminable air pressure automatically activates the compressor (6).

9. A driver's cab according to one of claims 6 to 8 **characterised in that** preferably arranged in the cab interior (3) is an operating device (15) with which the control valve (8) can be opened to carry out cleaning of the transparent roof panel (5).

10. A driver's cab according to one of the preceding claims **characterised in that** the vehicle is a tractor (1) equipped with a front loader (16).

## Revendications

1. Cabine de conduite (2) pour un véhicule agricole, en particulier pour un tracteur (1), dont l'espace intérieur de cabine (3) est limité vers le haut par un toit (4) qui comprend une surface de toit transparente (5), à la surface de toit transparente (5) étant associés des moyens (6, 7, 8, 9, 10) aptes à une application dirigée d'un fluide afin d'éliminer des impuretés de la surface de toit transparente (5), **caractérisée en ce que** la surface de toit transparente (5) est directement adjacente à un pare-brise (12) par un bord avant, et **en ce que** la surface de toit transparente (5) est collée au pare-brise (12) le long du bord avant.

2. Cabine de conduite selon la revendication 1, **caractérisée en ce que** le fluide est un gaz, en particulier de l'air comprimé.

3. Cabine de conduite selon la revendication 1, **caractérisée en ce que** la fluide est un liquide, en particulier de l'eau.

4. Cabine de conduite selon une des revendications précédentes, **caractérisée en ce que** sur le toit (4) sont disposés un ou plusieurs éléments d'écoulement (10) qui peuvent être alimentés en fluide par l'intermédiaire d'une conduite de pression (9).

5. Cabine de conduite selon la revendication 4, **caractérisée en ce que** le toit (4) comprend une structure de toit porteuse (11) à laquelle la surface de toit transparente (5) est fixée, les éléments d'écoulement (10) étant intégrés à une portion de bord de la structure de toit (11) adjacente à la surface de toit transparente (5).

6. Cabine de conduite selon une des revendications 4 ou 5, **caractérisée par** un réservoir sous pression (7) pour stocker le fluide sous pression, le réservoir sous pression (7) étant relié à la conduite de pression (9) par l'intermédiaire d'une valve de commande (8), de sorte que, lorsque la valve de commande (8) est ouverte, le fluide stocké dans le réservoir sous pression (7) sort à travers les éléments d'écoulement (10).

7. Cabine de conduite selon la revendication 6, **caractérisée en ce qu'**au réservoir sous pression (7) est associé un compresseur (6) qui permet de générer dans le réservoir sous pression (7) une pression d'air prescriptible.

8. Cabine de conduite selon la revendication 7, **caractérisée en ce qu'**au réservoir sous pression (7) est associé un capteur de pression (13) qui fait partie d'un système de régulation, lequel est apte à maintenir une pression d'air prescriptible dans le réservoir sous pression (7) et active automatiquement le compresseur (6) en cas de soupassement de la pression d'air prescriptible.

9. Cabine de conduite selon une des revendications 6 à 8, **caractérisée en ce que**, de préférence dans l'espace intérieur de cabine (3) est disposé un équipement d'actionnement (15) qui permet d'ouvrir la valve de commande (8) pour effectuer un nettoyage de la surface de toit transparente (5) .

10. Cabine de conduite selon une des revendications précédentes, **caractérisée en ce que** le véhicule est un tracteur (1) équipé d'un chargeur frontal (16) .
